# EUROPEAN PATENT SPECIFICATION

(11) **EP 1 935 248 B1**
(45) Date of publication and mention of the grant of the patent: **29.07.2009**
(21) Application number: 06126337.2
(22) Date of filing: 18.12.2006
(51) Int. Cl.: A22B 3/06

(54) **Apparatus and method for stunning poultry**
Vorrichtung und Verfahren zur Geflügelbetäubung
Appareil et procédé d'étourdissement de volailles

(43) Date of publication of application: 25.06.2008
(73) Proprietor: Rico Research B.V., 1531 PB WORMER (NL)
(72) Inventor: Koops, Hendricus, 6713 AT Ede (NL)
(74) Representative: Voncken, Bartholomeus Maria Ch.

(56) References cited:
- EP-A- 1 665 935
- GB-A- 2 302 639

## Description

The invention firstly relates to an apparatus for stunning poultry, comprising a power source, first means connected to a first pole of the power source for engaging the head of the poultry and second means connected to the opposite pole of the power source for engaging an opposite body part of the poultry. Such an apparatus is known from EP-A-1.665.935.

Although not strictly necessary, in practice the first means of such an apparatus for stunning poultry will be connected to the positive pole of the power source, while the second means are connected to the negative pole of the power source. In another known apparatus of this type said second means are connected to a suspension conveyor for conveying the poultry while suspended from their legs. Thus, the negative pole of the power source then will engage the legs of the poultry.

Such an apparatus will encounter a severe problem, because the legs of poultry are covered with a thick skin which only poorly conducts electrical current. Thus, for obtaining satisfying stunning results one should apply high voltages. However, in the case that such high voltage are applied and, unexpectedly, the skin of the legs is better conductive than expected, such high voltages can cause damage to the poultry, which negatively influences the quality of the flesh after slaughtering. Especially, in such a case strong contractions of the breast muscles will occur which will lead to bleedings which give the final product (breast flesh) an unattractive appearance.

It is an object of the present invention to provide an improved apparatus of the type referred to above.

Thus, in accordance with the present invention, the second means comprise an electrode for externally engaging the vent area of the poultry, wherein the power source is devised to be activated when the electrode externally engages the vent area of the poultry.

It is believed that the skin at the vent area of the poultry is more conductive then at the legs, such that an excellent conduction of the electric current from the electrode towards the poultry will occur. However, not only will the conductivity be increased, but it also will be more stable among a series of poultry, such that the conductivity can be predicted more precisely. The result is, that a more precise setting of the voltage between the first and second pole of the power source can be chosen, leading to reproducible results.

Preferably, the electrode is substantially plate-shaped. This means that the contact between the electrode and the poultry occurs at a relatively large area.

However, it is possible too that the plate-shaped electrode comprises a central hole to be positioned at the vent of the poultry. Thus, although a contact results over a relatively large area, such contact is prevented at the vent itself.

Further it is preferred that the dimensions of the electrode are such that, during use, it remains free from the legs of the poultry.

Preferred embodiments of the apparatus according to the present invention are subject of the subclaims.

Secondly the invention relates to a method for stunning poultry.

In accordance with the present invention said method comprises connecting the head of the poultry to a first pole of a power source and connecting the external vent area of the poultry to the second pole of the power source, and activating the power source when the electrode has externally engaged the vent area of the poultry.

Preferably, for connecting the external vent area of the poultry to the second pole of the power source a plate-shaped electrode is used.

Also preferably, during stunning the electrode is kept free from the legs of the poultry.

Preferred embodiments of the method according to the present invention are subject of the subclaims.

Hereinafter the invention will be elucidated while referring to the drawing, in which an embodiment of the apparatus according to the present invention is illustrated.
Figure 1 shows, schematically, a side elevational view of an embodiment of the apparatus;
figure 2 shows, on a reduced scale and extremely schematically, a top plan view, and
figure 3 shows on an enlarged scale an electrode.

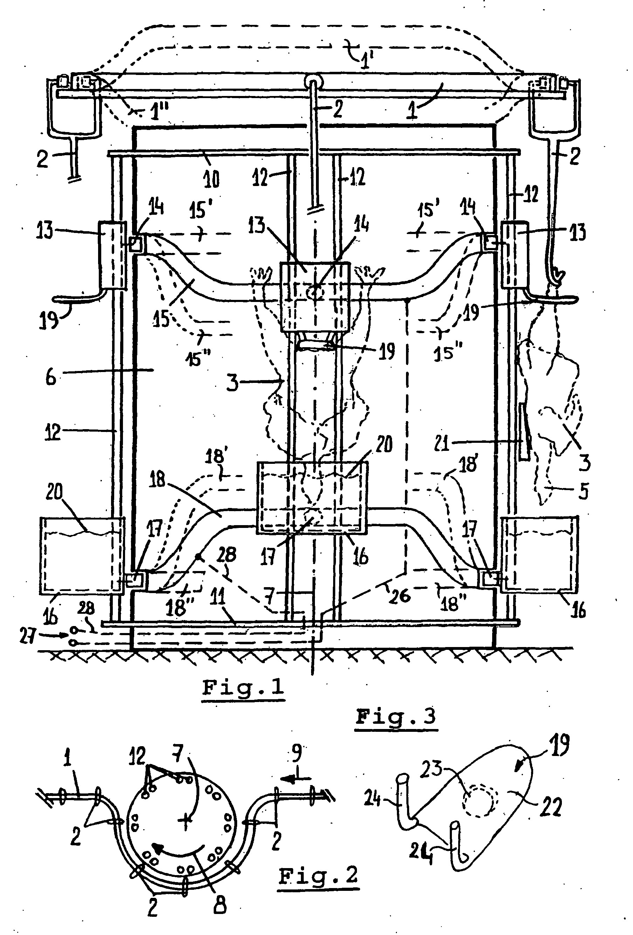

Firstly referring to figure 1, an embodiment of an apparatus for stunning poultry is illustrated which is meant for cooperation with a suspension conveyor 1. Such a suspension conveyor, which is known per se, comprises shackles 2 from which poultry 3 is suspended from their legs 4. That means that the head 5 of the poultry 3 is directed downwards.

In the illustrated embodiment the apparatus according to the present invention comprises a rotating carousel-like device which is provided with a stationary core 6. In a manner not illustrated in detail this stationary core 6 carries a frame which can be rotated around a central axis 7. In figure 2 the direction of rotation of the frame around the central axis 7 has been indicated by arrow 8. Likewise, the direction of travel of the suspension conveyor 1 has been indicated by arrow 9. As illustrated, the suspension conveyor 9 partly encircles the carousel-like device.

Again referring to figure 1, the frame of the carousel-like device comprises an upper support plate 10 and a lower support plate 11. Between these support plates 10 and 11 pairs of guiding rods 12 extend vertically. As illustrated clearly in figure 2, a number of said pairs of guiding rods 12 is spaced at regular intervals along the circumference of the carousel-like device. In the embodiment illustrated schematically in figure 2 eight of such pairs are provided; in figure 1, however, some of these pairs have been omitted for simplifying the drawing.

The guiding rods 12 illustrated in figure 1 at the right-hand side correspond with the guiding rods 12 at the three o'clock position in figure 2; likewise the guiding rods 12 positioned centrally in figure 1 correspond with the guiding rods at the six o'clock position in figure 2, whereas the guiding rods 12 at the left-hand position in figure 1 correspond with the nine o'clock position in figure 2.

Each pair of guiding rods 12 firstly carries an upper sliding block 13 which carries a follower roll 14 that cooperates with a stationary curve 15 in the stationary core 6. Further each pair of guiding rods 12 carries a second sliding block 16 which carries a follower roll 17 that cooperates with a stationary curve 18 in the stationery core 6.

The upper sliding block 13 carries a plate-shaped electrode 19 which is meant for contacting the vent area of the poultry 3; the lower sliding block 16 is shaped as a liquid container containing a conductive fluid 20.

The curve 15, roll 14, sliding block 13 and plate-shaped electrode 19 are made of a conductive material, such that through line 26 the plate-shaped electrode 19 is connected to a first pole of the power source 27, preferably the negative pole. Likewise, the conductive fluid 20 is connected to the opposite pole (preferably the positive pole) of the power source 27 through line 28, curve 18, roll 17 and sliding block 16.

In operation poultry 3, which is conveyed by the suspension conveyor 1, reaches the carousel-like device at the three o'clock position illustrated in figure 2. As shown in figure 1, in this position the upper sliding block 13 is at a high position, in which the plate-shaped electrode 19 does not engage the poultry 3 at the vent area yet (it is noted however that the plate-shaped electrode is already positioned between the legs of the poultry). Likewise the lower sliding block (liquid container) 16 is in a low position, in which the head 5 of the poultry 3 is above the conductive liquid 20.

When the frame of the device rotates as indicated by arrow 8 in figure 2, the follower rolls 14 and 17 of the sliding blocks 13 and 16, respectively, will follow the respective stationary curves 15 and 18, respectively, and will move downwardly and upwardly, respectively, to the positions illustrated in figure 1 in the central location. In these positions the plate-shaped electrode 19 has contacted the vent area of the poultry 3, whereas the head 5 of the poultry is submerged in the conductive fluid 20 in the liquid container 16. Now the power source 27 is activated and an electrical current runs through the body of the poultry, stunning the bird.

During a continued rotation of the device the upper sliding block 13 again will move to its high position, whereas the liquid container 16 will move towards its low position, in which the bird 3 again is free and wherein there is no contact anymore between the plate-shaped electrode 19 and vent area of the poultry (in figure 1 the bird has not been illustrated in this location, but it will assume a position which corresponds with the position illustrated at the right-hand side of the figure).

Each successive bird arriving along the suspension conveyor 1 will be processed in this manner.

It is also possible that the poultry is movable upwards and downwards through an appropriate shape of the suspension conveyor 1. The shape 1' thereof than will correspond with the shape 15' of the upper curve and shape 18' of the lower curve to obtain the appropriate relative movements between the poultry 3, plate-shaped electrode 19 and container 16. Likewise the shape 1" thereof will correspond with the shape 15" of the upper curve and shape 18" of the lower curve.

In figure 1 further support means 21 have been illustrated schematically, which serve for locating and maintaining the poultry 3 in a correct position. Such means may be stationary, but also can be movable, for example under influence of the cooperation between curve means and follower means.

Figure 3 shows a perspective view of the plate-shaped electrode 19. It comprises two connecting rods 24 which are to be connected to the sliding block 13 (although any other manner of connection is possible too). A central region 22 is plate-shaped to achieve a large contact area with a vent region of poultry. In an alternative embodiment said central region 22 is provided with a central hole 23 (illustrated in dotted lines) to be positioned at the vent of the poultry.

In another embodiment not illustrated, the poultry is oriented horizontally during the stunning process, for example supported at its chest or back (e.g. by means corresponding to the support means 21).

The invention is not limited to the embodiment described before, which may be varied widely within the scope on the invention as defined by the appending claims.

## Claims

1. Apparatus for stunning poultry (3), comprising a power source (27), first means (20) connected to a first pole of the power source for engaging the head (5) of the poultry and second means (19) connected to the opposite pole of the power source for engaging an opposite body part of the poultry, **characterised in that** the second means comprise an electrode (19) for esternally engaging the vent area of the poultry, wherein the power source (27) is devised to be activated when the electrode (19) externally engages the vent area of the poultry.

2. Apparatus according to claim 1, wherein the electrode (19) is substantially plate-shaped.

3. Apparatus according to claim 2, wherein the plate-shaped electrode (19) comprises a central hole (23) to be positioned at the vent of the poultry.

4. Apparatus according to any of the previous claims, wherein the dimensions of the electrode (19) are such that, during use, it remains free from the legs of the poultry.

5. Apparatus according to any of the previous claims, comprising means (2) for suspending the poultry from the legs.

6. Apparatus according to claim 5 and comprising a suspension conveyorl (1) for conveying the poultry while suspended from the legs, and further comprising a rotating carousel-like device which carries at regular intervals along its circumference a number of plate-shaped electrodes (19) for spreading the legs of the poultry, wherein means (14,15) are provided for realising a relative upwards and downward movement of the plate-shaped electrodes (19) relative to poultry (3) suspended from the suspension conveyor (1) when the suspension conveyor conveys the poultry around part of the circumference of the carousel-like device in coordination with the rotation of the carousel-like device.

7. Apparatus according to claim 6, wherein the plate-shaped electrodes (19) are movable upwards and downwards along respective guides (12) attached to the carousel-like device through the cooperation between a stationary curve means (15) and movable follower means (14) attached to the plate-shaped electrodes;

8. Apparatus according to claim 6, wherein the plate-shaped electrodes (19) have a stationary vertical position and wherein the suspension conveyor has successive sloping parts (1';1") for moving the poultry (3) upwards and downwards relative to the plate-shaped electrodes (19).

9. Apparatus according to any of the claims 1-4, comprising a support for supporting the breast or back of the poultry in a substantially horizontal position.

10. Apparatus according to any of the previous claims, wherein the first means comprise an electrically conductive liquid (20) in which the head (5) of the poultry (3) is to be submerged, and wherein the liquid is contained in a number of successive containers (16), such that during operation of the apparatus each separate container will receive only one poultry head simultaneously.

11. Apparatus according to claim 10 and meant for cooperation with a suspension conveyor (1) for conveying the poultry (3) while suspended from their legs, comprising a rotating carousel-like device which carries at regular intervals along its circumference a number of liquid containers (16), wherein a relative upward and downward movement between the containers and the poultry occurs when the suspension conveyor conveys the poultry around part of the circumference of the carousel-like device.

12. Apparatus according to claim 11, wherein the liquid containers (16) are movable upwards and downwards along respective guides (12) attached to the carousel-like device through the cooperation between a stationary curve means (10) and movable follower means (17) attached to the liquid containers.

13. Apparatus according to claim 12, wherein the liquid containers (16) have a stationary vertical position and wherein the suspension conveyor (1) has successive sloping parts (1';1") for moving the poultry upwards and downwards relative to the liquid containers.

14. Method for stunning poultry, comprising connecting the head (5) of the poultry (3) to a first pole of a power source (27) and connecting the external vent area of the poultry to the second pole of the power source, and activating the power source when the electrode has externally engaged the vent area of the poultry*.*

15. Method according to claim 14, wherein for connecting the external vent area ot the poultry to the second pole of the power source (27) a plate-shaped electrode (19) is used.

16. Method according to claim 15, wherein the plate-shaped electrode (19) comprises a central hole (23) to be positioned at the vent of the poultry.

17. Method according to any of the claims 14-16, wherein during-stunning the electrode (19) is kept free from the legs of the poultry.

18. Method according to any of the claims 14-17, wherein the poultry during stunning is kept in a position suspended from its legs.

19. Method according to any of the claims 14-17, wherein the poultry during stunning is supported at the chest or back in a substantially horizontal position.

## Patentansprüche

1. Vorrichtung zum Betäuben von Geflügel (3), aufweisend eine Spannungsquelle (27), mit einem ersten Pol der Spannungsquelle verbundene erste Einrichtungen (20) zum Eingriff mit dem Kopf (5) des Geflügels und mit dem anderen Pol der Spannungsquelle verbundene zweite Einrichtungen (19) zum Eingriff mit einem gegenüberliegenden Körperteil des Geflügels, **dadurch gekennzeichnet, daß** die zweiten Einrichtungen eine Elektrode (19) zum äußeren Eingriff mit dem Afterbereich des Geflügels aufweisen, wobei die Spannungsquelle (27) so konzipiert ist, um aktiviert zu werden, wenn die Elektrode (19) mit dem Afterbereich des Geflügeltiers außen im Eingriff ist.

2. Vorrichtung nach Anspruch 1, wobei die Elektrode (19) im Wesentlichen plattenförmig ist.

3. Vorrichtung nach Anspruch 2, wobei die plattenförmige Elektrode (19) ein an dem Afterbereich des Geflügels anzuordnendes zentrales Loch (23) aufweist.

4. Vorrichtung nach einem der vorstehenden Ansprüche, wobei die Abmessungen der Elektrode (19) derart sind, daß sie während des Gebrauchs von den Beinen des Geflügels frei bleibt.

5. Vorrichtung nach einem der vorstehenden Ansprüche, aufweisend Einrichtungen (2) zum Aufhängen des Geflügels an den Beinen.

6. Vorrichtung nach Anspruch 5 und aufweisend einen Aufhängetransporter (1) zum Transportieren des an den Beinen augehängten Geflügels und außerdem aufweisend eine sich drehende karussellartige Vorrichtung, die entlang ihres Umfangs in regelmäßigen Abständen mehrere plattenförmige Elektroden (19) zum Spreizen der Beine des Geflügels trägt, wobei Einrichtungen (14,15) bereitgestellt sind, um in Abstimmung mit der Drehung der karussellartigen Vorrichtung eine relative Auswärts- und Abwärtsbewegung der plattenförmigen Elektroden (19) relativ zu dem von dem Aufhängetransporter (1) herabhängenden Geflügel durchzuführen, wenn der Aufhängetransporter das Geflügel um seinen Teil des Umfangs der karussellartigen Vorrichtung transportiert.

7. Vorrichtung nach Anspruch 6, wobei die plattenförmigen Elektroden (19) entlang jeweiliger an der karussellartigen Vorrichtung angebrachter Führungen (12) durch das Zusammenwirken zwischen einer stationären Kurveneinrichtung (15) und an den plattenförmigen Elektroden angebrachten bewegbaren Folgeeinrichtungen (14) aufwärts und abwärts bewegbar sind.

8. Vorrichtung nach Anspruch 6, wobei die plattenförmigen Elektroden (19) eine stationäre vertikale Position haben und wobei der Aufhängetransporter aufeinanderfolgende geneigte Teile (1',1' ') aufweist, um das Geflügel (3) relativ zu den plattenförmigen Elektroden (19) aufwärts und abwärts zu bewegen.

9. Vorrichtung nach einem der Ansprüche 1 bis 4, aufweisend einen Halter zum Halten der Brust oder des Rückens des Geflügels in einer im wesentlichen horizontalen Position.

10. Vorrichtung nach einem der vorstehenden Ansprüche, wobei die ersten Einrichtungen eine elektrisch leitende Flüssigkeit (20) aufweisen, in welche der Kopf (5) des Geflügels (3) einzutauchen ist, und wobei die Flüssigkeit in mehreren aufeinanderfolgenden Behältern (16) untergebracht ist, so das während des Betriebs der Vorrichtung jeder einzelne Behälter gleichzeitig nur einen einzigen Kopf aufnehmen wird.

11. Vorrichtung nach Anspruch 10 und vorgesehen für ein Zusammenwirken mit einem Aufhängetransporter (1) zum Transportieren des an den Beinen aufgehängten Geflügels (3), aufweisend eine sich drehende karussellartige Vorrichtung, die entlang ihres Umfangs in regelmäßigen Abständen mehrere Flüssigkeitsbehälter (16) trägt, wobei eine relative Aufwärts" und Abwärtsbewegung zwischen den Behältern und dem Geflügel stattfindet, wenn der Aufhängetransporter das Geflügel um einen Teil des Umfangs der karussellartigen Vorrichtung transportiert.

12. Vorrichtung nach Anspruch 11, wobei die Flüssigkeitsbehälter (16) entlang jeweiliger an der karussellartigen Vorrichtung angebrachter Führungen (12) durch Zusammenwirken zwischen einer stationären Kurveneinrichtung (10) und an den Flüssigkeitsbehältern angebrachten bewegbaren Kurvenrolleneinrichtungen (17) aufwärts und abwärts bewegbar sind.

13. Vorrichtung nach Anspruch 12, wobei die Flüssigkeitsbehälter (16) eine stationäre vertikale Position haben und wobei der Aufhängetransporter (1) aufeinanderfolgende geneigte Teile (1",1") hat, um das Geflügel relativ zu den Flüssigkeitsbehältern aufwärts und abwärts zu bewegen.

14. Verfahren zum Betäuben von Geflügel aufweisend Verbinden des Kopfs (5) des Geflügels (3) mit einem ersten Pol einer Spannungsquelle (27) und Verbinden des äußeren Afterbereichs des Geflügels mit dem zweiten Pol der Spannungsquelle und Antivieren der Spannungsquelle, wenn die Elektrode mit dem Afterbereich des Geflügels außen im Eingriff ist.

15. Verfahren nach Anspruch 14, wobei zum Verbinden des äußeren Afterbereichs des Geflügels mit dem zweiten Pol der Spannungsquelle (27) eine plattenförmige Elektrode (19) verwendet wird.

16. Verfahren nach Anspruch 15, wobei die plattenförmige Elektrode (19) ein an dem After des Geflügels anzuordnendes zentrales Loch (23) aufweist.

17. Verfahren nach einem der Ansprüche 14 bis 16, wobei während des Betäubens die Elektrode (19) frei von den Beinen des Geflügels gehalten wird.

18. Verfahren nach einem der Ansprüche 14 bis 17, wobei das Geflügel während des Betäubens in einer an den Beinen aufgehängten Position gehalten wird.

19. Verfahren nach einem der Ansprüche 14 bis 17, wobei das Geflügel während des Betäubens an der Brust oder dem Rücken in einer im Wesentlichen horizontalen Position gehalten wird.

## Revendications

1. Appareil pour étourdir la volaille (3), comprenant une source de courant (27), des premiers moyens (20) reliés à un premier pôle de la source de courant pour mettre en prise la tête (5) de la volaille et des seconds moyens (19) reliés au pôle opposé de la source de courant pour mettre en prise une partie opposée du corps de la volaille, **caractérisé en ce que** les seconds moyens comprennent une électrode (19) destinée à venir en prise extérieurement avec à région du cloaque de la volaille, la source de courant (27) étant conçue pour être activée lorsque l'électrode (19) vient en prise extérieurement avec la région du cloaque de la volaille.

2. Appareil selon la revendication 1, dans lequel l'électrode (19) est sensiblement en forme de plaque,

3. Appareil selon la revendication 2, dans lequel l'électrode (19) en forme de plaque comprend un trou central (23) devant être positionné au niveau du cloaque de la volaille.

4. Appareil selon l'une quelconque des revendications précédentes, dans lequel les dimensions de l'électrode (19) sont telles que, en cours d'utilisation, l'électrode reste dégagée des pattes de la volaille.

5. Appareil selon l'une quelconque des revendications précédentes, comprenant des moyens (2) pour suspendre la volaille par les pattes.

6. Appareil selon la revendication 5, comprenant un convoyeur de suspension (1) pour transporter la volaille suspendue par les pattes, et comprenant, en outre, un dispositif rotatif de type carrousel qui, à intervalles réguliers le long de sa circonférence, porte un certain nombre d'électrodes (19) en forme de plaques, destinées à écarter les pattes de la volaille, des moyens (14, 15) étant prévus pour réaliser un mouvement relatif des électrodes (19) en forme de plaques vers le haut et vers le bas par rapport à la volaille (3) suspendue au convoyeur de suspension (1) lorsque le convoyeur de suspension transporte la volaille autour d'une partie de la circonférence du dispositif de type carrousel en coordination avec la rotation du dispositif de type carrousel.

7. Appareil selon la revendication 6, dans lequel les électrodes (19) en forme de plaques sont déplaçables vers le haut et vers le bas le long de guides respectifs (12), fixés au dispositif de type carrousel, par la coopération entre un moyen incurvé fixe (15) et un moyen suiveur mobile (14) fixé aux électrodes (19) en forme de plaques.

8. Appareil selon la revendication 6, dans lequel les électrodes (19) en forme de plaques ont une position verticale fixe et dans lequel le convoyeur de suspension présente des parties inclinées successives (1', 1") pour déplacer la volaille (3) vers le haut et vers le bas par rapport aux électrodes (19) en forme de plaques.

9. Appareil selon l'une quelconque des revendications 1 à 4, comprenant un support destiné à supporter la poitrine ou le dos de la volaille dans une position sensiblement horizontale.

10. Appareil selon l'une quelconque des revendications précédentes, dans lequel les premiers moyens comprennent un liquide électriquement conducteur (20) dans lequel doit être immergée la tête (5) de la volaille (3), et dans lequel le liquide est contenu dans un certain nombre de conteneurs successifs (16), de façon que, pendant le fonctionnement de l'appareil, chaque conteneur séparé reçoive simultanément une seule tête de volaille.

11. Appareil selon la revendication 10, destiné à coopérer avec un convoyeur de suspension (1) pour transporter la volaille (3) suspendue par les pattes, comprenant un dispositif rotatif de type carrousel qui, à intervalles réguliers le long de sa circonférence, porte un certain nombre de conteneurs de liquide (16), un mouvement relatif vers le haut et vers le bas entre les conteneurs et la volaille ayant lieu lorsque le convoyeur de suspension transporte la volaille autour d'une partie de la circonférence du dispositif rotatif de type carrousel.

12. Appareil selon la revendication 11, dans lequel les conteneurs de liquide (16) sont déplaçables vers le haut et vers le bas le long de guides respectifs (12) fixés au dispositif de type carrousel par la coopération entre un moyen incurvé fixe (10) et un moyen suiveur mobile (17) fixé aux conteneurs de liquide.

13. Appareil selon la revendication 12, dans lequel les conteneurs de liquide (16) ont une position verticale fixe et dans lequel le convoyeur de suspension (1) présente des parties inclinées successives (1', 1") pour déplacer la volaille vers le haut et vers le bas par rapport aux conteneurs de liquide.

14. Procédé pour étourdir la volaille, consistant à relier la tête (5) de la volaille (3) à un premier pôle d'une source de courant (27) et à relier la région externe du cloaque de la volaille au second pôle de la source de courant, et à activer la source de courant lorsque l'électrode s'est engagée extérieurement dans la région du cloaque de la volaille.

15. Procédé selon la revendication 14, dans lequel, pour relier la région externe du cloaque de la volaille au second pôle de la source de courant (27), on utilise une électrode (19) en forme de plaque.

16. Procédé selon la revendication 15, dans lequel l'électrode (19) en forme de plaque comprend un trou central (23) devant être positionné au niveau du cloaque de la volaille.

17. Procédé selon l'une quelconque des revendications 14-16, dans lequel, pendant l'étourdissement, l'électrode (19) est maintenue degagée des pattes de la volaille.

18. Procédé selon l'une quelconque des revendications 14-17, dans lequel la volaille, pendant l'étourdissement, est maintenue dans une position suspendre par les pattes.

19. Procédé selon l'une quelconque des revendications 14-17, dans lequel la volaille, pendant l'étourdissement, est supportée au niveau de la poitrine ou du dos dans une position sensiblement horizontale.
